# EUROPÄISCHE PATENTSCHRIFT

(11) **EP 1 526 933 B1**
(45) Veröffentlichungstag und Bekanntmachung des Hinweises auf die Patenterteilung: **02.04.2008**
(21) Anmeldenummer: 03750402.4
(22) Anmeldetag: 29.07.2003
(51) Int. Cl.: B21K 1/56, F16H 25/22

(54) **VERFAHREN ZUM HERSTELLEN EINER SPINDELMUTTER EINES KUGELGEWINDETRIEBES UND WERKZEUGDORN HIERFÜR**
METHOD FOR THE PRODUCTION OF A SPINDLE NUT OF A SPHERICAL THREAD DRIVE MECHANISM AND MANDREL THEREFOR
PROCEDE DE PRODUCTION D'UN ECROU D'ARBRE D'UNE VIS D'ENTRAINEMENT A BILLES ET MANDRIN POUR CE PROCEDE

(30) Priorität: 08.08.2002 DE 10236281
(43) Veröffentlichungstag der Anmeldung: 04.05.2005
(73) Patentinhaber: Schaeffler KG, 91074 Herzogenaurach (DE)
(72) Erfinder: OSTERLÄNGER, Jürgen, 91448 Emskirchen (DE); KRAUS, Manfred, 91074 Herzogenaurach (DE); KELLER, Torsten, 91093 Hessdorf (DE); MOTZ, Thomas, 91074 Herzogenaurach (DE)
(86) Internationale Anmeldenummer: PCT/EP2003/008338
(87) Internationale Veröffentlichungsnummer: WO 2004/020124

(56) Entgegenhaltungen:
- WO-A-01/11264
- DE-A- 3 100 349
- DE-A- 3 203 233
- DE-A- 4 131 486
- DE-A- 19 944 875
- GB-A- 897 008
- US-A- 3 667 311

## Beschreibung

### Gebiet der Erfindung

Die vorliegende Erfindung betrifft ein Verfahren zum Herstellen einer Spindelmutter eines Kugelgewindetriebes und einen Werkzeugdorn hierfür.

Aus DE 31 00 349 C2 beispielsweise ist ein Kugelgewindetrieb einer Kugelrollspindel und einer diese unter Bildung eines Ringspaltes umgreifenden Lagermutter bekannt geworden, die einander gegenüberliegende, schraubenförmig umlaufende, vertiefte Laufbahnen gleicher Steigung besitzen. Die Windungen der Laufbahnen sind durch entsprechend schraubenförmig umlaufende, erhöhte Schultern voneinander getrennt. Die Laufbahnen bilden Kugelbahnen die sich etwa über einen Umfangswinkel von 360° erstrecken, wobei Lagerkugeln in diesen Kugelbahnen laufen. Jede Kugelbahn weist eine etwa s-förmige Umlenkstelle auf, an der die Kugeln aus der einen Windung in die benachbarte Windung der Laufbahn umgelenkt werden. Die Spindelmutter weist an der Umlenkstelle eine Schulterunterbrechung und eine Umlenkvertiefung auf. Die Umlenkvertiefung ist erforderlich, damit die Kugeln über die korrespondierende Schulter der Spindel angehoben werden können. In vorteilhafter Weise sind die Umlenkvertiefungen unmittelbar an der Mutter ausgebildet, so dass diese rundum vollständig geschlossen ausgebildet sein kann. Das Einarbeiten der Umlenkvertiefungen kann nach dem Härten der Spindelmutter beispielsweise elektrolytisch oder durch Funkenerosion erfolgen.

Für große Stückzahlen umfassende Serien ist dieses Herstellen der Umlenkvertiefung sehr kostenaufwendig.

Aufgabe der vorliegenden Erfindung ist es, ein Verfahren zum Herstellen einer Spindelmutter gemäß Oberbegriff des Anspruchs 1 (siehe z.B. WO-A-01/11264) anzugeben, mit dem große Stückzahlen auf kostengünstige Weise herstellbar sind.

Das erfindungsgemäße Verfahren sieht die folgenden Schritte vor: anordnen eines Werkzeugdorns in einen hohlen Rohling, wobei der Werkzeugdorn an seinem Außenumfang ein Gegenprofil der schraubenförmigen Kugelbahn und je einen Vorsprung für jede Umlenkvertiefung aufweist; vorsehen eines Werkzeuges, dass von außen auf den Rohling unter Ausübung von radialen Kräften einwirkt und diesen umformt, wobei unter diesem Umformen die innere Umfangsfläche des Rohlings an das Gegenprofil und an den Vorsprung des Werkzeugdorns angeformt werden, wodurch die schraubenförmige Kugelbahn und die Umlenkvertiefung gebildet werden. Während dieses Vorgangs wird Material des Rohlings verdrängt, um an dessen innerer Umfangsfläche die Laufbahnen und die Umlenkvertiefungen herzustellen.

Das erfindungsgemäße Verfahren ist auf kostengünstige Weise durchführbar. An sich bekannte, für die Erfindung geeignete Umformmethoden sind beispielsweise das Kneten, das Abstreckdrücken, sowie das Fluidumformen. Der Werkstoff des Rohlings wird unter diesem Umformvorgang weggedrückt und an die Kontur des Werkzeugdorns mit den Vorsprüngen angeformt. Das an sich bekannte Kneten eignet sich in besonderer Weise zur Herstellung einer erfindungsgemäßen Spindelmutter, da mittels dieses Verfahrens rotationsunsymmetrische Konturen gut herstellbar sind, wobei Knetbacken unter radialer Stoßbewegung auf den relativ zu den Knetbacken drehenden Rohling einwirken und diesen umformen.

Nach dem Umformvorgang wird der Werkzeugdorn samt Vorsprung entfernt, wonach die Spindelmutter einer Wärmebehandlung unterzogen werden kann. Die so gehärtete Spindelmutter kann mit weiteren Bauteilen zu dem Kugelgewindetrieb komplettiert werden. Das Verfahren zum Herstellen der Spindelmutter kann mit der anschließenden Wärmebehandlung in aufeinanderfolgenden Arbeitsschritten erfolgen, so dass erfindungsgemäße Spindelmuttern auf wirtschaftliche Weise herstellbar sind.

Ein erfindungsgemäß Werkzeugdorn zur Durchführung des beschriebenen Verfahrens sieht vor, dass der Werkzeugdorn an seinem Außenumfang ein Gegenprofil der schraubenförmigen Laufbahn und eine Ausnehmung aufweist, in der ein als Stempel ausgebildeter Vorsprung angeordnet ist, der gegenüber dem Werkzeugdorn radial aus- und einwärts verschieblich und in seiner ausgefahrenen Position festlegbar ist, wobei der Stempel in seiner eingeschobenen Position innerhalb des Gegenprofils des Werkzeugdorns angeordnet ist. Mit diesem erfindungsgemäßen Werkzeugdorn ist ein problemloses Entformen gewährleistet. Wenn der Werkzeugdorn in einer Schraubenbewegung aus der Spindelmutter heraus gedreht werden soll, wird lediglich zuvor der Stempel radial einwärts bewegt, so dass eine Schraubbewegung problemlos möglich ist.

Zur Betätigung des Stempels kann der Werkzeugdorn hohl ausgebildet sein, wobei eine in dem hohlen Werkzeugdorn angeordnete Schaltstange derart mit dem Stempel zusammenarbeitet, das in einer ersten Schaltstellung der Schaltstange der Stempel in seiner ausgefahrenen Stellung gehalten ist. Zum Entformen wird dann die Schaltstange in eine zweite Schaltstellung gebracht, die ein Einwärtsschieben des Stempels ermöglicht. Anstelle einer Schaltstange kann jedoch der Werkzeugdorn auch mit Hydraulikflüssigkeit gefüllt sein, die mit Druck beaufschlagbar ist, wobei diese Hydraulikflüssigkeit mit dem Stempel derart zusammenarbeitet, dass dieser unter dem anliegenden Druck in seiner ausgefahrenen Position gehalten ist. Nach Wegnahme des Drucks kann der Stempel radial einwärts verschoben werden, um den Werkzeugdorn unter einer Schraubbewegung aus der Spindelmutter heraus zudrehen.

Ein Ausführungsbeispiel der Erfindung wird nun anhand der Zeichnungen beschrieben. Es zeigen:
- Figur 1: einen Kugelgewindetrieb im Längsschnitt in schematischer Darstellung,
- Figur 2: die Abwicklung der Mutter eines Kugelgewindetriebs mit über den Umfang verteilten Umlenkstellen,
- Figur 3: die Mutter des Gewindetriebs mit eingesetzten Einsatzkörpern, jedoch ohne Spindel, im Längsschnitt in Teildarstellung,
- Figur 4: die Anordnung nach Figur 3 im schnitt gemäß der Linie IV-IV in Figur 3 mit eingesetzter Spindel,
- Figur 5: einen der Einsatzkörper des Umlenksystems gemäß Figuren 3 und 4 im zur Stirnansicht parallelen Querschnitt gemäß der Linie V-V in Figur 4,
- Figur 6: ein erfindungsgemäßes Verfahren und ein erfindungsgemäßer Werkzeugdorn zur Herstellung der Spindelmutter und
- Figur 7: ein weiterer erfindungsgemäßer Werkzeugdorn.

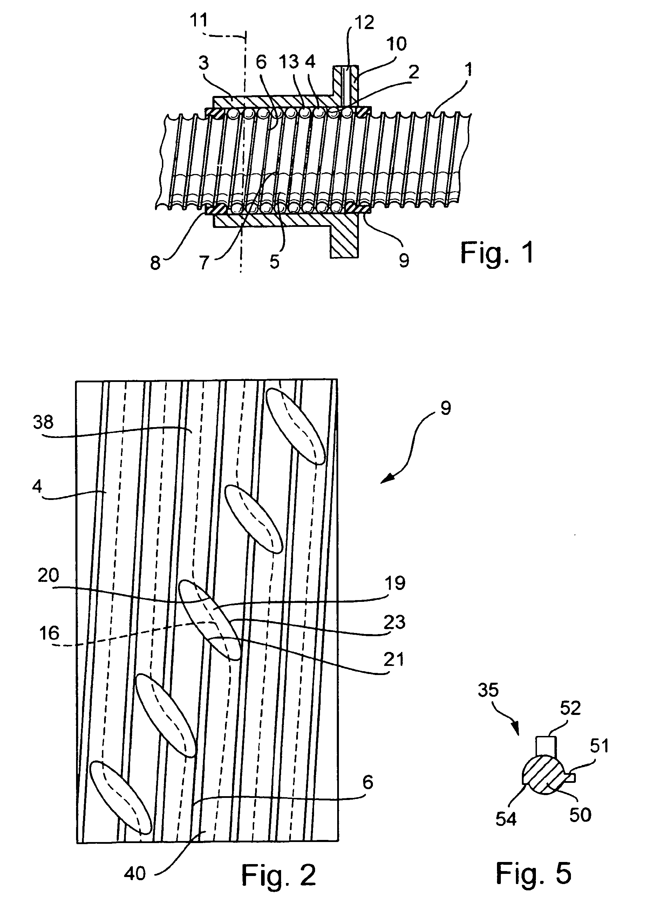

Figur 1 zeigt den schematischen Aufbau einer Kugelrollspindel. Die Spindel 1 wird unter Bildung eines Ringspaltes 2 von einer Lagermutter 3 umgriffen. Am Innenumfang der Mutter 3 ist eine nach Art eines Gewindes schraubenförmig umlaufende vertiefte Laufbahn 4 eingearbeitet, die einer ebenfalls schraubenförmig vertieften Laufbahn 5 an der Außenseite der Spindel 1 gegenüberliegt. Die beiden Laufbahnen 4, 5 besitzen gleiche Steigung und die einzelnen Windungen der Laufbahn 4 der Mutter 3 bzw. der Laufbahn 5 der Spindel 1 sind durch eine entsprechend schraubenförmig umlaufende, erhöhte Schulter 6 bzw. 7 voneinander getrennt. Die Mutter 3 kann endseitig gegen die Spindel 1 mit Hilfe von Abstreifern 8, 9 abgedichtet sein und sie kann einen radial abstehenden Umfangsflansch 10 am einen Ende besitzen, mit dessen Hilfe die Mutter 3 an einem beliebigen Bauteil 11 befestigt werden kann. Auch zylindrische Ausführungen ohne Flansch oder beliebige andere Außenformen sind möglich Der Flansch 10 besitzt z. B. einen Schmiermittelanschluß 12 zum Einfüllen eines Schmiermittels in den Ringspalt 2.

Die einander gegenüberliegenden Laufbahnen 4, 5 der Mutter und der Spindel bilden Kugelbahnen oder Kugelumläufe, in denen Kugeln 13 zur Lagerung der sich drehenden Spindel 1 umlaufen. Infolge des Ringspaltes 2 liegt die Spindel 1 nicht an der Mutter 3 an und sie stützt sich an dieser nur über die Kugeln 13 ab.

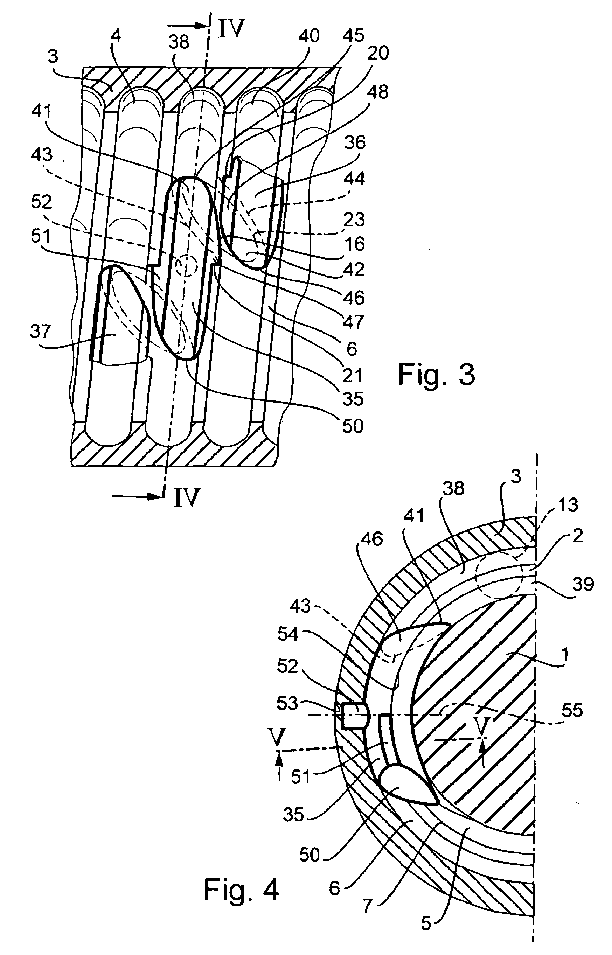

Die Kugelbahnen erstrecken sich jeweils über einen Umfangswinkel von 360°. Um in sich geschlossene Kugelbahnen - diese sind in Figur 2 gestrichelt eingezeichnet - zu erhalten, enthält jede Kugelbahn eine etwa S-förmige Umlenkstelle 16. Dabei sind die Umlenkstellen 16 der verschiedenen Kugelbahnen gleichmäßig über den Umfang verteilt. Eine z. B. in die Windung der Laufbahn 4 der Mutter 3 und in die gegenüberliegende Windung 39 der Laufbahn 5 der Spindel 1 in Figur 3 von oben oberhalb der Zeichenebene her eintretende Kugel 13, wie sie in Figur 4 gestrichelt angedeutet ist, rollt sich entlang dieser Windungen 40 der Laufbahn 4 der Mutter 3 und in die dieser gegenüberliegende Windung der Laufbahn der Spindel 1 zurückgeführt wird. Am in Figur 3 unteren Ende führt diese Kugelbahn aus der Zeichenebene heraus und die Kugel rollt sich oberhalb der Zeichenebene in den zugehörigen, nicht sichtbaren Windungsbereichen der Mutter 3 und der Spindel 1 ab, bis sie oben wieder in die Windung 38 der Mutter und die Windung 39 der Spindel eintritt. Insgesamt gesehen erhält man auf diese Weise eine Kugelbahn, die über nahezu 360° schraubenförmig verläuft, wobei die Enden des schraubenförmigen Bereichs an der Umlenkstelle 16 miteinander verbunden sind. Der Verlauf derartiger Kugelbahnen, bei denen die Kugeln intern zurückgeführt werden, sind an sich bekannt, so dass nicht weiter darauf eingegangen werden soll.

Damit die Kugeln 13 an der jeweiligen Umlenkstelle 16 zurückgeführt werden können, weist die Schulter 6 der Mutter 3 an der Umlenkstelle 16 eine Unterbrechung 19 auf. Die Begrenzungskanten dieser Unterbrechung sind mit den Bezugsziffern 20 und 21 bezeichnet. Ferner ist an der Umlenkstelle 16 eine die Unterbrechung 19 kreuzende Umlenkvertiefung 23 in die Wandung der Mutter 3 mittels eines weiter unten beschriebenen Verfahrens eingearbeitet. Diese Umlenkvertiefung 23 ist so tief, dass eine in sie eintauchende Kugel nicht mehr die Schulter 7 der Spindel 1 berührt. Auf diese Weise können die Kugeln 13 an der Umlenkstelle 16 die nicht unterbrochene Schulter 7 der Spindel über die Umlenkvertiefung 23 und die Unterbrechung 19 der Schulter 6 der Mutter 3 in radialer Richtung außen umrollen. An der Umlenkstelle 16 befinden sich die Kugeln 13 also außer Eingriff mit der Laufbahn der Spindel 1. Nach Durchrollen der Umlenkvertiefung 16 greifen die Kugeln wieder in die Laufbahn der Spindel ein und führen diese.

Die bis jetzt beschriebenen Maßnahmen reichen noch nicht aus, damit die Kugeln dem Wege der Kugelbahn an der Umlenkstelle 16 folgen. Es muss nämlich noch vermieden werden, dass die Kugeln 13 an der Umlenkstelle 16 anstelle in die Umlenkvertiefung 23 geradeaus weiterrollen. Hierzu ist vorgesehen, dass an beiden Enden der Umlenkvertiefung 16 in die Laufbahn der Spindel greifende und die Kugeln aus dieser Laufbahn in die Umlenkvertiefung hebende Umlenkflächen vorhanden sind und dass die Kugelbahn zwischen den beiden Umlenkflächen zur Spindel 1 hin mittels einer in den Ringspalt 2 zwischen Mutter 3 und Spindel 1 greifenden Abdeckung abgedeckt ist. Die Kugeln 13 werden also zunächst von einer der beiden Umlenkflächen von der Spindel 1 zur Umlenkvertiefung 23 hin abgelenkt, wonach sie auf der Abdeckung abrollen und sodann über die andere Umlenkfläche wieder in die Laufbahn der Spindel zurückkehren. Die beiden Umlenkflächen versperren den Kugeln sozusagen den geradeaus weiterlaufenden Weg, wobei man deshalb beidseitig der Umlenkvertiefung eine Umlenkfläche benötigt, da ja die Spindel oder die Muter in beide Drehrichtungen rotieren kann, so dass auch die Kugeln die Kugelbahnen in beiden Richtungen durchlaufen können müssen.

Die Umlenkung der Kugeln 13 an den Umlenkstellen 16 erfolgt mit Hilfe von Einsätzen. Es handelt sich hier um Einsatzkörper 35, 36, 37, die in den Figuren 3 und 4 mit dick ausgezogenen Linien dargestellt sind, wobei nur der Einsatzkörper 35 vollständig, die Einsatzkörper 36, 37 jedoch geschnitten gezeigt sind. Jeder Umlenkstelle 16 sind zwei Einsatzkörper zugeordnet. Zwischen zwei einander benachbarten Kugelbahnen oder Kugelumläufen ist ein Einsatzkörper angeordnet. Diese beiden Einsatzkörper, beispielsweise die Einsatzkörper 35, 36, die der die Umlenkvertiefung 23 enthaltenden Umlenkstelle zugeordnet sind, sind voneinander unabhängig und besitzen eine wulstförmige Gestalt, wie anschaulich insbesondere aus Figur 4 hervorgeht. Diese im Querschnitt im wesentlichen kreisförmigen Wulstkörper sind entsprechend den Laufbahnen der Mutter und der Spindel gekrümmt, dass heißt in der Seitenansicht erstrekken sie sich entlang eines Kreisbogens. Der eine der beiden Einsatzkörper, z. B. der Einsatzkörper 35, liegt in der Windung 38 der Laufbahn 4 der Mutter 3 sowie in der gegenüberliegenden Windung 39 der Laufbahn 5 der Spindel 1. Der andere Einsatzkörper 36 ist in die benachbarte Windung 40 der Laufbahn 4 der Mutter 3 sowie in die dieser gegenüberliegenden Laufbahn der Spindel eingelegt, die in Figur 4 nicht sichtbar ist. Die beiden der jeweiligen Umlenkstelle zugeordneten Einsatzkörper 35, 36 sind also in benachbarten Windungen der Laufbahnen der Mutter und der Spindel angeordnet, wobei sie von entgegengesetzten Seiten herkommend an der betreffenden Umlenkstelle 16 endigen. Dabei liegen sich die beiden Einsatzkörper 35, 36 mit ihren einen Stirnseiten, zwischen denen sich die betreffenden Umlenkvertiefung 23 befindet, schräg gegenüber. Diese Stirnseiten sind jeweils mit ihrer in die Laufbahn der Spindel 1 eingelegten Partie zur Bildung der die Kugeln 13 aus der Laufbahn 5 der Spindel 1 hebenden Umlenkfläche vorgezogen und zur seitlichen Führung der Kugeln schräg eingewölbt. In Figur 3, in der die Einsatzkörper von der Spindel her gesehen dargestellt sind, sind die vorgezogenen Partien 41, 42 sichtbar, die gemäß Figur 4 nahezu auf dem Grund der Laufbahn 5 der Spindel 1 aufliegen, wobei hier ein Spiel vorhanden ist. Von diesen Partien 41, 42 aus springen die Stirnseiten in Längsrichtung des jeweiligen Einsatzkörpers gesehen zur Mutter hin zurück, wobei in den Figuren 3 und 4 die zur Mutter hin verlaufenden Begrenzungslinien 43, 44 der Stirnseiten 45, 46 gestrichelt eingezeichnet sind. Dabei sind diese Stirnseiten gleichzeitig so schräg gestellt und gewölbt, dass man eine fließende Umlenkung der Kugeln in die Umlenkvertiefung 23 erhält. Jeder der Einsatzkörper enthält nun außerdem an der Seite der zu der Umlenkvertiefung 23 gehörenden Unterbrechung 19 der Schulter 6 der Mutter 3 einen seitlichen Vorsprung 47 bzw. 48, wobei dieser Vorsprung bis zur der jeweiligen Umlenkstelle 16 zugewandten Stirnseite des Einsatzkörpers verläuft. Ferner stehen diese Vorsprünge 47, 48 in Verlängerung der Schulter 6 der Mutter 3 über die Unterbrechung 19 dieser Schulter, an der sich die Umlenkvertiefung 23 befindet vor, wobei die Vorsprünge 47, 48 in dem Ringspalt 2 zwischen Mutter 3 und Spindel 1 angeordnet sind. In der Draufsicht von der Spindel her gesehen wiesen die Vorsprünge 47, 48 (siehe Figur 3) eine leicht abgerundete Außenkontur auf, die fließend in die Begrenzungslinie der zugehörigen Einsatzkörperstirnseite übergeht. Die beiden, jeweils zu einem benachbarten Einsatzkörper gehörenden Vorsprünge 47, 48 liegen sich mit geringem Abstand gegenüber und bilden jeweils eine Hälfte der Abdeckung der Kugelbahn zur Spindel hin. Innerhalb der Umlenkstelle sind die Kugeln also einerseits am Boden der Umlenkvertiefung 23 und andererseits nicht nur an den gewölbten Stirnseiten der beiden Einsatzkörper, sondern auch an den beiden Vorsprüngen 47, 48 geführt.

Jeder Einsatzkörper, beispielsweise der Einsatzkörper 35, erstreckt sich innerhalb der zugehörigen Windungen 38 bzw. 39 der Mutter 3 bzw. der Spindel 1 bis zur Umlenkstelle der benachbarten Kugelbahn, wie anschaulich aus Figur 3 hervorgeht. Dabei ist der Einsatzkörper an der anderen Stirnseite 50, die dieser benachbarten Umlenkstelle zugeordnet ist, entsprechend ausgebildet wie die bereits beschriebene Stirnseite und außerdem ist dort ein entsprechender seitlicher Vorsprung 51 vorhanden. Mit anderen Worten, dreht man die Einsatzkörper 35, 36, 37 um ihre in radialer Richtung verlaufende Quermittelachse 55 um 180°, so ergibt sich wiederum genau die gleiche Gestalt. Auf diese Weise sind jeder Umlenkstelle die einen Hälften von zwei Einsatzkörpern zugeordnet, während die jeweils andere Hälfte jedes Einsatzkörpers einer der beiden benachbarten Umlenkstellen zugeordnet ist. So begrenzt beispielsweise der Einsatzkörper 35 mit seiner einen Stirnseite 45 und dem zugewandten seitlichen Vorsprung 47 die zur Umlenkvertiefung 23 gehörende Umlenkstelle und mit seiner anderen Stirnseite 50 und dem zugewandten seitlichen Vorsprung 51 die in Figur 3 links benachbarte Umlenkstelle bzw. zugehörige Kugelbahn.

Es ist ersichtlich, dass die von den Kugelbahnen nicht erfaßten Bereiche der Laufbahnen der Spindel und der Mutter, die sich jeweils zwischen zwei Umlenkstellen befinden, von den Einsatzkörpern ausgefüllt sind, so dass kein toter Gang vorhanden ist, in den man sonst bei der Montage versehentlich Kugeln einfüllen könnte, die beim Betrieb zersplittern würden.

Zur Befestigung der Einsatzkörper ist vorgesehen, dass an diese am Außenumfang ein radial vorstehender Befestigungszapfen 52 angesetzt ist, der in eine entsprechende Sackbohrung 53 der Mutter eingesteckt ist. Alternativ können die Einsatzkörper aber auch eingeklebt oder eingeschweißt werden.

Die Einsatzkörper 35, 36, 37 lassen sich zweckmäßigerweise einstückig aus Kunststoff oder Metall fertigen.

Aus den Figuren 3 bis 5 ist außerdem noch ersichtlich, dass am Außenumfang der Einsatzkörper 35, 36, 37 eine in Längsrichtung durchgehende Stufenfläche 54 vorhanden ist, die in die der Spindel 1 zugewandte Unterseite des jeweiligen seitlichen Vorsprungs 47, 51 übergeht, um radial und axial in der Kugellaufbahn der Spindel ein entsprechendes Spiel zu erhalten.

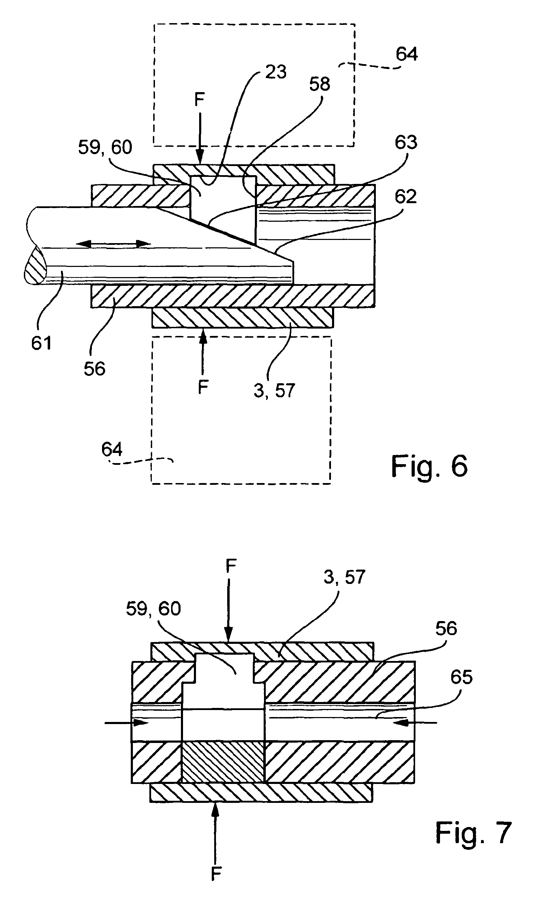

Figur 6 zeigt in schematischer Darstellung die Herstellung der erfindungsgemäßen Spindelmutter 3 sowie einen erfindungsgemäßen Werkzeugdorn zur Durchführung des Verfahrens. Ein Werkzeugdorn 56 wird zunächst in einen hohlen Rohling 57 eingeführt. Der Werkzeugdorn 56 ist an seiner äußeren Mantelfläche mit einem hier nicht dargestellten Gegenprofil zur Laufbahn 4 der Spindelmutter 3 versehen. Der Werkzeugdorn 56 ist ferner mit einer Ausnehmung 58 versehen, in der ein radial verschieblich angeordneter Stempel 59 angeordnet ist. Der Stempel 59 bildet als Vorsprung 60 das Gegenprofil zur Umlenkvertiefung 23 an der inneren Umfangsfläche der Spindelmutter 3. Der Werkzeugdorn 56 ist hohl ausgeführt, wobei eine Schaltstange 61 axial verschieblich in dem Werkzeugdorn 56 angeordnet ist. Die Schaltstange 61 ist mit einer Keilfläche 62 versehen, die mit einer Gegenfläche 63 des Stempels 59 zusammenarbeitet. Figur 6 zeigt den Stempel 59 in seiner ausgefahrenen Position. Auf den Rohling 57 wirken nun äußere Kräfte F ein, unter denen das Material des Rohlings 57 auf die Kontur des Werkzeugdorns 56 mit dessen Stempel 59 aufgeformt wird. Die Kraft F wird über Knetbacken 64 ausgeübt, die in der Figur 4 gestrichelt dargestellt sind. Die Knetbacken 64 führen während einer Rotation relativ zum Rohling 57 einen Festhub aus. Dieser Vorgang ist beendet, wenn am inneren Umfang des Rohlings 57 die Laufbahnen 4 und die Umlenkvertiefung 23 angeformt sind. Die Schaltstange 61 wird nun soweit axial verlagert, dass der Stempel 59 frei kommt. Nun kann der Stempel 59 radial einwärts verlagert werden. Im Anschluß daran kann der Werkzeugdorn 56 aus der Spindelmutter 3 heraus geschraubt werden.

Figur 7 zeigt das gleiche Verfahren wie Figur 6, jedoch einen gegenüber Figur 6 modifizierten Werkzeugdorn zur Durchführung des Verfahrens. Anstelle einer Schaltstange ist hier Hydraulikflüssigkeit 65 in dem hohlen Werkzeugdorn 56 eingefüllt. Die Hydraulikflüssigkeit 65 ist mit Druck beaufschlagbar. Unter dem anliegenden Druck ist der Stempel 59 in seiner radial auswärts gefahrenen Position gehalten. Nach Wegnahme des Drucks kann der Stempel 59 radial einwärts verlagert werden.

## Patentansprüche

1. Verfahren zum Herstellen einer Spindelmutter (3) eines Kugelgewindetriebes, wobei die Spindelmutter (3) an ihrem Innenumfang wenigstens eine einstückig angeformte schraubenförmige Laufbahn (4) aufweist, deren Windungen (38) durch Schultern (6) getrennt sind, wobei an wenigstens einer Umfangsstelle die Schulter (6) durch eine Umlenkvertiefung (23) unterbrochen ist, um Kugeln (13) aus der einen in eine benachbarte Windung (38) umzulenken, **gekennzeichnet durch** die folgenden Schritte:
anordnen eines Werkzeugdorns (56) in einem hohlen Rohling (57), wobei der Werkzeugdorn (56) an seinem Außenumfang ein Gegenprofil der schraubenförmigen Laufbahn (4) und je einen Vorsprung (59) für jede Umlenkvertiefung aufweist,
vorsehen eines Werkzeuges, das von von außen auf den Rohling (57) unter Ausübung von radialen Kräften (F) einwirkt und diesen umformt,
wobei unter diesem Umformen die innere Umfangsfläche des Rohlings (57) an das Gegenprofil und an den Vorsprung (59) des Werkzeugdorns (56) angeformt wird, wodurch die schraubenförmige Laufbahn (4) und die Umlenkvertiefung (23) gebildet werden.

2. Verfahren nach Anspruch 1, bei dem das Umformen mittels Kneten erfolgt, wobei Knetbacken (64) unter radialer Stoßbewegung auf den Rohling (57) einwirken und diesen umformen, wobei die Knetbacken (64) und der Rohling (57) relativ zueinander drehen.

3. Verfahren nach Anspruch 1, bei dem nach dem Umformvorgang der Werkzeugdorn (56) entfernt wird, wonach die Spindelmutter (3) in einer Wärmebehandlung gehärtet wird.

4. Werkzeugdorn zur Durchführung des Verfahrens nach Anspruch 1, wobei der Werkzeugdorn (56) an seinem Außenumfang ein Gegenprofil der schraubenförmigen Laufbahn und eine Ausnehmung (58) aufweist, in der ein Vorsprung (59) als Stempel (60) angeordnet ist, der gegenüber dem Werkzeugdorn (56) radial aus- und einwärts verschieblich und in seiner ausgefahrenen Position festlegbar ist, wobei der Stempel (60) in seiner eingeschobenenen Position innerhalb des Gegenprofils des Werkzeugdorns (56) angeordnet ist.

5. Werkzeugdorn nach Anspruch 4, bei der der Werkzeugdorn (56) hohl ausgebildet ist, wobei eine in dem hohlen Werkzeugdorn (56) angeordnete Schaltstange (61) derart mit dem Stempel (60) zusammenarbeitet, daß in einer ersten Schaltstellung der Schaltstange (61) der Stempel (60) in seiner ausgefahrenen Stellung gehalten ist.

6. Werkzeugdorn nach Anspruch 4, bei der der Werkzeugdorn (56) hohl ausgebildet ist, wobei in den Werkzeugdorn (56) eingefüllte Hydraulikflüssigkeit (64) mit Druck beaufschlagbar ist und derart mit dem Stempel (60) zusammarbeitet, daß dieser unter dem anliegenden Druck in seiner ausgefahrenen Position gehalten ist.

## Claims

1. Method for the production of a spindle nut (3) of a ball screw drive, wherein the spindle nut (3), on its inner circumference, has at least one helical raceway (4) which is integrally formed in one piece and whose turns (38) are separated by shoulders (6), wherein the shoulder (6) is interrupted by a deflecting recess (23) at at least one circumferential point in order to deflect balls (13) from the one turn (38) into an adjacent turn (38), **characterized by** the following steps:
arranging a tool mandrel (56) in a hollow blank (57), wherein the tool mandrel (56), on its outer circumference, has a mating profile of the helical raceway (4) and a respective projection (59) for each deflecting recess,
providing a tool which acts on the blank (57) from outside while exerting radial forces (F) and shapes said blank (57),
wherein, with this shaping, the inner circumferential surface of the blank (57) is integrally formed at the mating profile and at the projection (59) of the tool mandrel (56), as a result of which the helical raceway (4) and the deflecting recess (23) are formed.

2. Method according to Claim 1, in which the shaping is effected by means of swaging, wherein swaging jaws (64) act on the blank (57) under a radial impact movement and shape said blank (57), wherein the swaging jaws (64) and the blank (57) rotate relative to one another.

3. Method according to Claim 1, in which, after the shaping process, the tool mandrel (56) is removed, whereupon the spindle nut (3) is hardened by heat treatment.

4. Tool mandrel for carrying out the method according to Claim 1, wherein the tool mandrel (56), at its outer circumference, has a mating profile of the helical raceway and an aperture (58) in which a projection (59) is arranged as punch (60), which is displaceable radially outwards and inwards relative to the tool mandrel (56) and can be fixed in its extended position, wherein the punch (60), in its retracted position, is arranged inside the mating profile of the tool mandrel (56).

5. Tool mandrel according to Claim 4, in which the tool mandrel (56) is of hollow design, wherein a control rod (61) arranged in the hollow tool mandrel (56) interacts with the punch (60) in such a way that, in a first control position of the control rod (61), the punch (60) is held in its extended position.

6. Tool mandrel according to Claim 4, in which the tool mandrel (56) is of hollow design, wherein hydraulic fluid (64) poured into the tool mandrel (56) can be pressurized and interacts with the punch (60) in such a way that the latter is held in its extended position under the applied pressure.

## Revendications

1. Procédé de fabrication d'un écrou de broche (3) d'une vis d'entraînement à billes, l'écrou de broche (3) comportant sur sa périphérie intérieure au moins une voie de roulement (4) hélicoïdale rapportée en monobloc, dont les spires (38) sont séparées par des épaulements (6), sur au moins une zone périphérique, l'épaulement (6) étant interrompu par un creux de renvoi (23) pour renvoyer des billes (13) d'une spire dans une spire (38) voisine, **caractérisé par** les étapes suivantes :
- disposer une tige filetée (56) dans une ébauche creuse (57), la tige filetée (56) comportant sur sa périphérie extérieure un contre-profil de la voie de roulement hélicoïdale (4) et chaque fois une saillie (59) pour chaque creux de renvoi,
- prévoir un outil, qui agit par l'extérieur sur l'ébauche (57) en exerçant des forces radiales (F) et qui déforme cette dernière, sous l'effet de cette déformation, la surface périphérique intérieure de l'ébauche (57) se façonnant contre le contre-profil et contre la saillie (59) de la tige filetée (56), pour former la voie de roulement (4) hélicoïdale et le creux de renvoi (23).

2. Procédé selon la revendication 1, dans lequel la déformation s'effectue au moyen d'un malaxage, des mâchoires de malaxage (64) agissant sous l'effet d'un déplacement en poussée radial sur l'ébauche (57), en déformant cette dernière, les mâchoires de malaxage (64) et l'ébauche (57) tournant les unes par rapport à l'autre.

3. Procédé selon la revendication 1, dans lequel, après le processus de déformation, la tige filetée (56) est éloignée, suite à quoi, l'écrou de broche (3) est trempé par un traitement thermique.

4. Tige filetée pour la réalisation du procédé selon la revendication 1, la tige filetée (56) comportant sur sa périphérie extérieure un contre-profil de la voie de roulement hélicoïdale et un évidement (58), dans lequel une saillie (59) est disposée en tant que poinçon (60), qui par rapport à la tige filetée (56) est déplaçable vers l'extérieur et vers l'intérieur en direction radiale et qui est susceptible d'être fixé dans sa position sortie, dans sa position rentrée, le poinçon (60) étant disposé à l'intérieur du contre-profil de la tige filetée (56).

5. Tige filetée selon la revendication 4, la tige filetée (56) étant conçue sous forme creuse, une barre de manoeuvre (61) disposée dans la tige filetée creuse (56) coopérant avec le poinçon (60) de sorte que dans une première position de manoeuvre de la barre de manoeuvre (61), le poinçon (60) soit maintenu dans sa position sortie.

6. Tige filetée selon la revendication 4, la tige filetée (56) étant conçue sous forme creuse, du fluide hydraulique (64) rempli dans la tige filetée (56) étant susceptible d'être soumis à une pression et coopérant avec le poinçon (60), de sorte que ce dernier soit maintenu dans sa position sortie, sous la pression appliquée.
